# EUROPEAN PATENT APPLICATION

(11) **EP 3 886 302 A1**
(43) Date of publication of application: **29.09.2021**
(21) Application number: 21153499.5
(22) Date of filing: 26.01.2021
(51) Int. Cl.: H02K 15/03, H02K 1/27

(54) **METHOD OF MANUFACTURING ROTOR FOR IPM MOTOR**

(30) Priority: 26.03.2020 JP 2020056007
(71) Applicant: Nidec Corporation, Kyoto-shi, Kyoto 601-8205 (JP)
(72) Inventor: YONEYAMA, Takashi, Kyoto, 601-8205 (JP)
(74) Representative: Stöckeler, Ferdinand

(57) **Abstract**

A method of manufacturing a rotor core, capable of accurately positioning a punched plate member with respect to a die, is provided. A motor (1) includes a columnar rotor core (21) formed of a plurality of disk-shaped rotor core members (25) stacked in the thickness direction, and a rotor magnet (22) inserted in a magnet insertion hole (21c). In the rotor core member (25), a positioning through hole (26) and a rotor magnet through hole (27) have different shapes. A method of manufacturing the motor (1) includes first space portion punching steps (S1, S2), and a through hole punching step (S3). The first space portion punching steps (S1, S2) include punching a plurality of first space portions (26b, 27b) in a band-shaped electromagnetic steel sheet (100). The first space portions (26b, 27b) are portions of a common portion in the positioning through hole (26) and the rotor magnet through hole (27) and have the same shape and do not affect positioning of the rotor magnet (22). The through hole punching step (S3) includes punching at least a portion of the remaining parts of the positioning through hole (26) and the rotor magnet through hole (27) other than the first space portions (26b, 27b).

## Description

### Technical Field

The present invention relates to a method of manufacturing a rotor for an IPM motor.

### Background Art

As a method of manufacturing a rotor for an IPM motor, a method is known in which a steel sheet is punched into a shape of a rotor core member by a pressing device or the like, and a plurality of punched rotor core members are stacked in the thickness direction.

As a method of manufacturing a rotor as described above, for example, a method of manufacturing a rotor core as disclosed in Patent Literature 1 has been known. In the method, a thin plate-shaped core piece having a plurality of insertion holes is formed, the core pieces are stacked to form a stacked body, and permanent magnets are inserted and embedded in the insertion holes of the stacked body.

The manufacturing method of Patent Literature 1 includes a first punching step of forming a plurality of first insertion holes in each of which a positioning portion for positioning a permanent magnet is formed on an edge thereof, and a second punching step of, for some of the first insertion holes formed in the core piece, forming second insertion holes in each of which the positioning portion is not formed by punching the positioning portion.

Further, in the manufacturing method of Patent Literature 1, the core pieces are stacked so that the insertion holes of the stacked body are formed by both the first insertion holes and the second insertion holes.

### Citation List

### Patent Literature

Patent Literature 1: Japanese Patent No. 5974672

### Summary of Invention

### Technical Problem

As in the configuration disclosed in Patent Literature 1 described above, when the first insertion holes are formed in the steel sheet in the first punching step, a plate member may be bent due to the imbalance of the punched shape when the punched plate member is transferred to a die, depending on the punched shape.

In that case, when the plate member is transferred to the die, the plate member may not be accurately positioned with respect to the die. In view of the above, there is a demand for a manufacturing method capable of accurately positioning the plate member when the plate member is transferred to the die.

An object of the present invention is to provide a rotor core manufacturing method capable of accurately positioning a punched plate member with respect to a die when the punched plate member is transferred to the die.

### Solution to Problem

A rotor core manufacturing method according to one embodiment of the present invention is a method of manufacturing a rotor for an IPM motor. The rotor includes: a rotor core in a columnar shape having a plurality of magnet insertion holes penetrating in an axial direction and arranged side by side in a circumferential direction, the rotor core being configured of a plurality of disk-shaped rotor core members stacked in a thickness direction; and a rotor magnet inserted in each of the magnet insertion holes. In each of the rotor core members, a plurality of through holes constituting the plurality of magnet insertion holes include a through hole having a different shape. This manufacturing method includes: a first punching step of punching, in a plate member, a plurality of first punched holes that are part of a common portion of the plurality of through holes and have the same shape and that are not related to positioning of the magnet insertion holes; and a second punching step of punching, in the plate member after the first punching step, at least a portion of the remaining part of the plurality of through holes other than the first punched holes as a second punched hole.

### Advantageous Effects of Invention

According to the rotor core manufacturing method according to one embodiment of the present invention, it is possible to realize a rotor core manufacturing method capable of accurately positioning a punched plate member with respect to a die when the punched plate member is transferred to the die.

### Brief Description of Drawings

Fig. 1 is a diagram schematically showing a schematic configuration of a motor according to an embodiment in a cross section including a central axis.
Fig. 2 is a perspective view showing a schematic configuration of a rotor core.
Fig. 3 is a plan view showing a schematic configuration of a rotor core member constituting the rotor core.
Fig. 4 is an enlarged plan view showing a part of the rotor core member in an enlarged manner.
Fig. 5 is a flowchart showing an example of a method of manufacturing a rotor core.
Fig. 6 is a plan view showing a state in which a positioning through hole and a rotor magnet through hole are formed in a strip-shaped electromagnetic steel sheet.
Fig. 7 is an enlarged view of a first space portion formed in a first step of a first space portion punching step in Fig. 6.
Fig. 8 is an enlarged view of a first space portion formed in a second step of the first space portion punching step in Fig. 6.
Fig. 9 is an enlarged view of a second punched hole formed in a through hole punching step.
Fig. 10 is a diagram schematically showing how an electromagnetic steel sheet is transferred to a die.

### Description of Embodiments

Hereinafter, an embodiment of the present invention will be described in detail with reference to the drawings. The same or corresponding parts in the drawings are denoted by the same reference numerals and their explanations are not returned. Further, the dimensions of the constituent members in each drawing do not faithfully represent the actual dimensions of the constituent members and the dimensional ratio of respective constituent members.

It is assumed herein that a direction parallel to a central axis P of a rotor 2 is referred to as the term "axial direction", "axial", or "axially", that a direction perpendicular to the central axis P is referred to as the term "radial direction", "radial", or "radially", and that a direction along a circular arc centered on the central axis P is referred to as the term "circumferential direction", "circumferential", or "circumferentially". However, there is no intention to limit the direction at the time of using a motor 1 according to the present invention by the definitions of the directions.

Further, in the following description, expressions such as "fixed", "connected" and "attached" (hereinafter, fixed, etc.) are used not only when the members are directly fixed to each other, but also when the members are fixed via another member. That is, in the following description, the expression such as fixation includes the meaning of direct and indirect fixation between members.

### (Configuration of Motor)

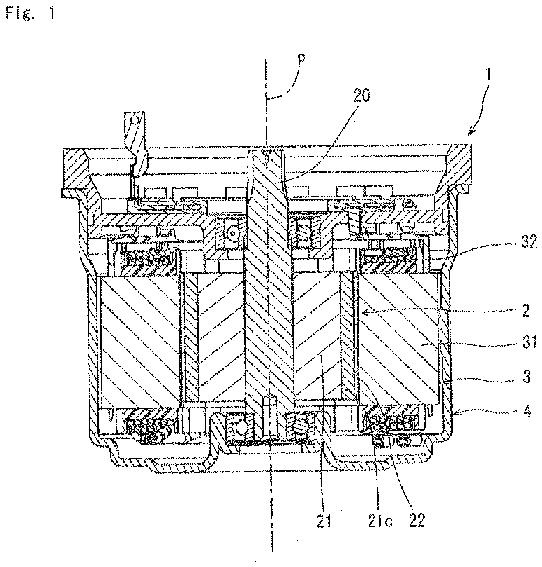

Fig. 1 shows a schematic configuration of the motor 1 according to an embodiment of the present invention. The motor 1 has a rotor 2, a stator 3, and a housing 4. The rotor 2 rotates about the central axis P with respect to the stator 3. In the present embodiment, the motor 1 is a so-called inner rotor type motor in which the rotor 2 is rotatably arranged about the central axis P in the tubular stator 3.

The rotor 2 has a shaft 20, a rotor core 21, and a plurality of rotor magnets 22. The rotor 2 is arranged radially inside the stator 3 and is rotatable with respect to the stator 3.

In the present embodiment, the rotor core 21 has a cylindrical shape extending along the central axis P. The rotor core 21 is formed by stacking a plurality of rotor core members 25 formed in a disk shape from an electromagnetic steel sheet in the thickness direction.

As shown in Fig. 1, a shaft 20 extending along the central axis P is fixed to the rotor core 21 in a state of penetrating in the axial direction. Thus, the rotor core 21 rotates with the shaft 20.

In the present embodiment, the rotor core 21 has a plurality of magnet insertion holes 21c. In the plurality of magnet insertion holes 21c of the rotor core 21, rotor magnets 22 are housed. As will be described in detail later, the plurality of magnet insertion holes 21c are arranged in the rotor core 21 at predetermined intervals in the circumferential direction. Therefore, the plurality of rotor magnets 22 housed in the plurality of magnet insertion holes 21c are also arranged at predetermined intervals in the circumferential direction.

As described above, the motor 1 of the present embodiment is an interior permanent magnet (IPM) motor in which the rotor magnets 22 are embedded in the rotor core 21. The detailed configuration of the rotor core 21 will be described later.

The stator 3 is housed in the housing 4. In the present embodiment, the stator 3 has a tubular shape, and the rotor 2 is located radially inside thereof. That is, the stator 3 is positioned so as to face the rotor 2 in the radial direction. The rotor 2 is located radially inside the stator 3 so as to be rotatable about the central axis P.

The stator 3 includes a stator core 31 and a stator coil 32. In this embodiment, the stator core 31 has a cylindrical shape extending in the axial direction. The stator core 31 has a plurality of electromagnetic steel sheets formed in a predetermined shape and stacked in the thickness direction. The stator coil 32 is wound on a tooth (not shown) of the stator core 31.

The housing 4 has a tubular shape and extends along the central axis P. In the present embodiment, the housing 4 has a cylindrical shape having an internal space capable of accommodating the rotor 2 and the stator 3 inside. The detailed configuration of the housing 4 will not be described.

### (Rotor Core)

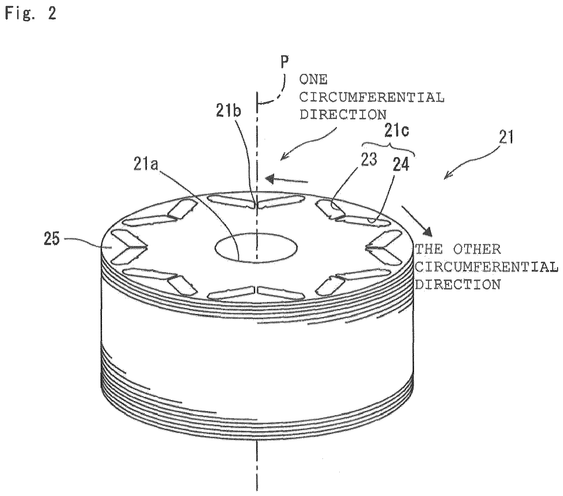

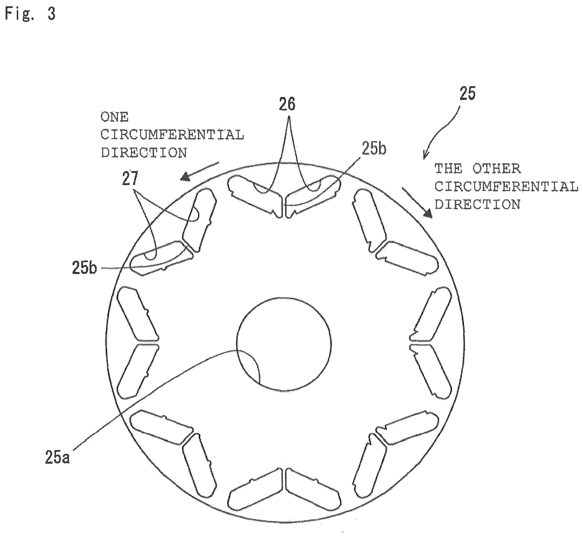

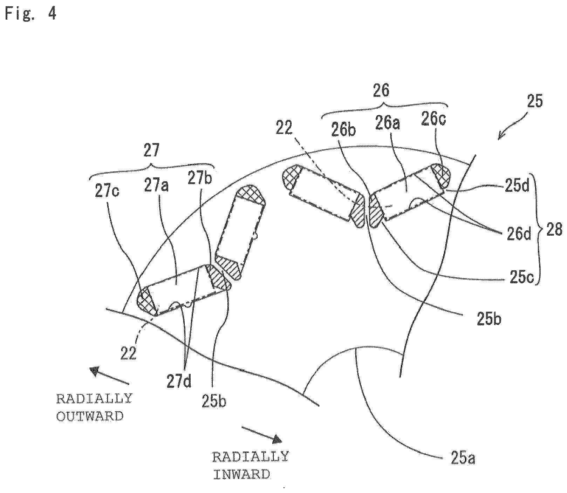

Next, the detailed configuration of the rotor core 21 will be described with reference to Figs. 2 to 4. Fig. 2 is a perspective view showing a schematic configuration of the rotor core 21. Fig. 3 is a plan view showing a schematic configuration of the rotor core member 25 constituting the rotor core 21. Fig. 4 is an enlarged plan view showing a part of the rotor core member 25 in an enlarged manner.

As described above, the rotor core 21 has a cylindrical shape extending along the central axis P. That is, the rotor core 21 has a shaft through hole 21a in the center when viewed in the axial direction of the central axis P. The shaft 20 penetrates through the shaft through hole 21a. The shaft 20 is fixed to the rotor core 21 in a state of penetrating the shaft through hole 21a. Thus, the rotor core 21 rotates with the shaft 20.

The rotor core 21 has a plurality of magnet insertion holes 21c arranged side by side in the circumferential direction so as to surround the shaft through hole 21a. The plurality of magnet insertion holes 21c include a first magnet insertion hole 23 and a second magnet insertion hole 24. The first magnet insertion hole 23 and the second magnet insertion hole 24 are located in a V shape when viewed in the axial direction of the central axis P. A plurality of sets of the first magnet insertion holes 23 and the second magnet insertion holes 24, each of which are located in a V shape, are arranged side by side in the circumferential direction of the rotor core 21. That is, the rotor core 21 has a plurality of sets of the first magnet insertion holes 23 and the second magnet insertion holes 24, each of which is located in a V shape, arranged side by side in the circumferential direction.

The rotor core 21 has a radial connection portion 21b at a portion where the distance between the first magnet insertion hole 23 and the second magnet insertion hole 24 is the minimum. The first magnet insertion hole 23 extends from the radial connection portion 21b in a radially outward direction and one circumferential direction when the central axis P is viewed in the axial direction. The second magnet insertion hole 24 extends from the radial connection portion 21b in a radially outward direction and the other circumferential direction when the central axis P is viewed in the axial direction.

In the first magnet insertion hole 23 and the second magnet insertion hole 24, the positioning through holes 26 and the rotor magnet through holes 27 of the rotor core member 25, which will be described later, are alternately positioned in the stacking direction of the rotor core 21. That is, by stacking the rotor core members 25 described later while rotating each of them at a predetermined angle in the circumferential direction, the first magnet insertion hole 23 and the second magnet insertion hole 24 are configured in which the positioning through hole 26 and the rotor magnet through hole 27 are alternately arranged in the axial direction of the central axis P.

The rotor core 21 may have only one of the first magnet insertion hole 23 and the second magnet insertion hole 24, or have one or a plurality of magnet insertion holes having a shape different from that of the first magnet insertion hole 23 and the second magnet insertion hole 24 described above.

As shown in Fig. 3, the rotor core member 25 constituting the rotor core 21 is a disk-shaped electromagnetic steel sheet, and has a central through hole 25a located at the center in a plan view, a plurality of positioning through holes 26 and a plurality of rotor magnet through holes 27 located on the outer peripheral side in a plan view, and a plurality of connection portions 25b.

The plurality of connection portions 25b constitute the radial connection portion 21b of the rotor core 21 in a state where the plurality of rotor core members 25 are stacked in the thickness direction. Therefore, in the rotor core member 25, the connection portion 25b is located at a portion where the distance between a set of positioning through holes 26 is the smallest, the set of positioning through holes 26 constituting the first magnet insertion hole 23 and the second magnet insertion hole 24 of the rotor core 21 in a state where the plurality of rotor core members 25 are stacked in the thickness direction. Further, in the rotor core member 25, the connection portion 25b is located at a portion where the distance between a set of rotor magnet through holes 27 is the smallest, the set of rotor magnet through holes 27 constituting the first magnet insertion hole 23 and the second magnet insertion hole 24 of the rotor core 21 in a state where the plurality of rotor core members 25 are stacked in the thickness direction.

The central through hole 25a constitutes the shaft through hole 21a in a state where the plurality of rotor core members 25 are stacked in the thickness direction.

The plurality of positioning through holes 26 include at least one set of positioning through holes 26 located in a V shape in a plan view. The set of positioning through holes 26 constitutes the first magnet insertion hole 23 and the second magnet insertion hole 24 of the rotor core 21 in a state where the plurality of rotor core members 25 are stacked in the thickness direction.

One of the set of positioning through holes 26 is an elongated hole extending from the connection portion 25b in a radially outward direction and one circumferential direction. The other of the set of positioning through holes 26 is an elongated hole extending from the connection portion 25b in a radially outward direction and the other circumferential direction.

In the present embodiment, the plurality of positioning through holes 26 include four sets of the positioning through holes 26 having the above-described configuration, arranged side by side in the circumferential direction on the outer peripheral side of the rotor core member 25.

As shown in Fig. 4, each positioning through hole 26 includes a positioning housing portion 26a for positioning and housing the rotor magnet 22, a first space portion 26b located radially inward with respect to the positioning housing portion 26a, and a second space portion 26c located radially outward with respect to the positioning housing portion 26a. The positioning housing portion 26a is a space located between a pair of long side portions 26d at the peripheral edge portion of the positioning through hole 26. The distance between the pair of long side portions 26d is equivalent to the thickness dimension of the rotor magnet 22. The positioning housing portion 26a corresponds to the magnet housing portion of the present invention.

The thickness dimension of the rotor magnet 22 is the length of the rotor magnet 22 in the lateral direction when the rotor core member 25 is viewed in a plane in a state where the rotor magnet 22 is inserted in the positioning through hole 26 of the rotor core member 25.

The first space portion 26b is a triangular hole. The second space portion 26c is a semicircular hole.

The rotor core member 25 has a first positioning protrusion 25c, located between the positioning housing portion 26a and the first space portion 26b, for determining the position of the rotor magnet 22 in the width direction, and a second positioning protrusion 25d, located between the positioning housing portion 26a and the second space portion 26c, for determining the position of the rotor magnet 22 in the width direction, in the peripheral edge portion of the positioning through hole 26. The first positioning protrusion 25c and the second positioning protrusion 25d protrude from the peripheral edge portion of the positioning through hole 26 toward the inside of the positioning through hole 26.

The positioning housing portion 26a side of the first positioning protrusion 25c and the positioning housing portion 26a side of the second positioning protrusion 25d set the position of the rotor magnet 22 in the width direction.

The width direction of the rotor magnet 22 is the length in the longitudinal direction of the rotor magnet 22 when the rotor core member 25 is viewed in a plane in a state where the rotor magnet 22 is inserted in the positioning through hole 26 of the rotor core member 25.

With the above configuration, the rotor magnet 22 is positioned in the positioning through hole 26 by the first positioning protrusion 25c, the second positioning protrusion 25d, and the pair of long side portions 26d. Therefore, the first positioning protrusion 25c, the second positioning protrusion 25d, and the pair of long side portions 26d form the positioning portion 28 of the rotor magnet 22 in the positioning through hole 26. The first positioning protrusion 25c, the second positioning protrusion 25d, and the pair of long side portions 26d form a part of the inner edge of the positioning through hole 26.

As shown in Fig. 3, the plurality of rotor magnet through holes 27 include at least one set of rotor magnet through holes 27 located in a V shape in a plan view. The set of rotor magnet through holes 27 constitutes the first magnet insertion hole 23 and the second magnet insertion hole 24 of the rotor core 21 in a state where the plurality of rotor core members 25 are stacked in the thickness direction.

One of the set of rotor magnet through holes 27 is an elongated hole extending from the connection portion 25b in a radially outward direction and one circumferential direction. The other of the set of rotor magnet through holes 27 is an elongated hole extending from the connection portion 25b in a radially outward direction and the other circumferential direction.

The plurality of rotor magnet through holes 27 have four sets of rotor magnet through holes 27 having the above-described configuration arranged side by side in the circumferential direction on the outer peripheral side of the rotor core member 25.

As shown in Fig. 4, each rotor magnet through hole 27 includes a rotor magnet housing portion 27a that houses the rotor magnet 22, a first space portion 27b located radially inward with respect to the rotor magnet housing portion 27a, and a second space portion 27c located radially outward with respect to the rotor magnet housing portion 27a. The rotor magnet housing portion 27a is a space located between the pair of long side portions 27d in the peripheral edge portion of the rotor magnet through hole 27. The distance between the pair of long side portions 27d is greater than the thickness dimension of the rotor magnet 22.

The first space portion 27b is a triangular hole. The second space portion 27c is a semicircular hole.

The first space portion 26b of the positioning through hole 26 and the first space portion 27b of the rotor magnet through hole 27 have the same shape, and are portions not affecting the positioning accuracy in the positioning through hole 26 and the rotor magnet through hole 27. In Fig. 4, the first space portions 26b and 27b are shown by diagonal-hatched areas.

The second space portion 26c of the positioning through hole 26 and the second space portion 27c of the rotor magnet through hole 27 have different shapes, and are portions not affecting the positioning accuracy in the positioning through hole 26 and the rotor magnet through hole 27. In Fig. 4, the second space portions 26c and 27c are shown by the cross-hatched areas.

In Fig. 4, the positioning housing portion 26a of the positioning through hole 26 and the rotor magnet housing portion 27a of the rotor magnet through hole 27 are white areas.

### (Rotor Core Manufacturing Method)

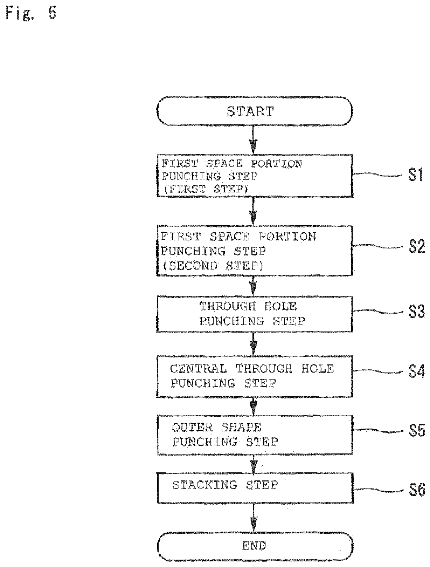

Next, a method of manufacturing the rotor core 21 having the above-described configuration will be described with reference to Figs. 5 to 10.

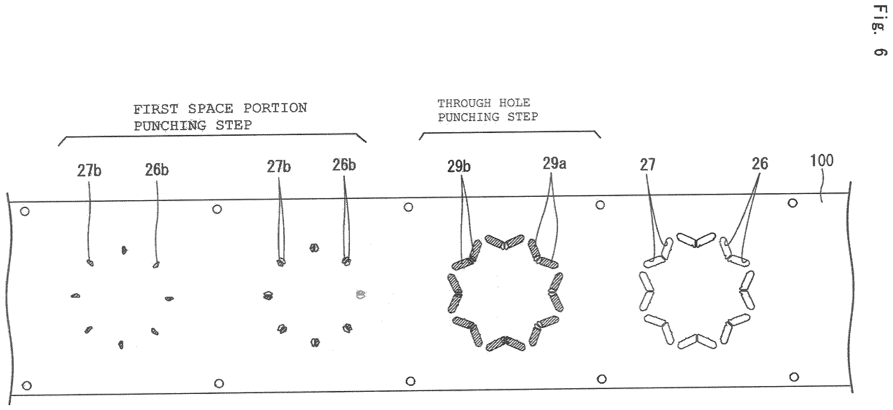

Fig. 5 is a flowchart showing an example of a method of manufacturing the rotor core 21. Fig. 6 is a plan view showing how the positioning through hole 26 and the rotor magnet through hole 27 are formed in the strip-shaped electromagnetic steel sheet 100. Note that Fig. 6 shows the pressing process in order from left to right. The electromagnetic steel sheet 100 corresponds to the plate member of the present invention.

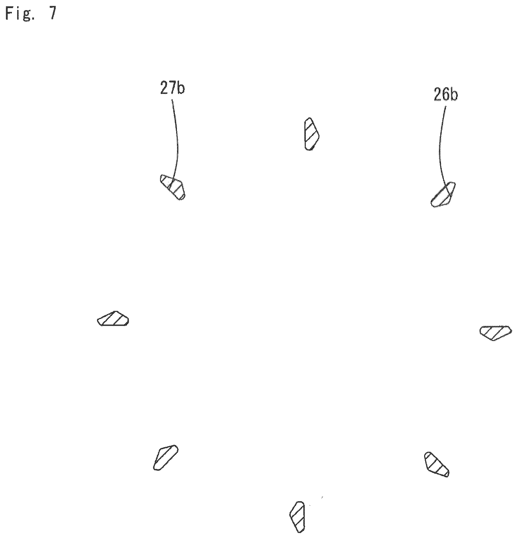

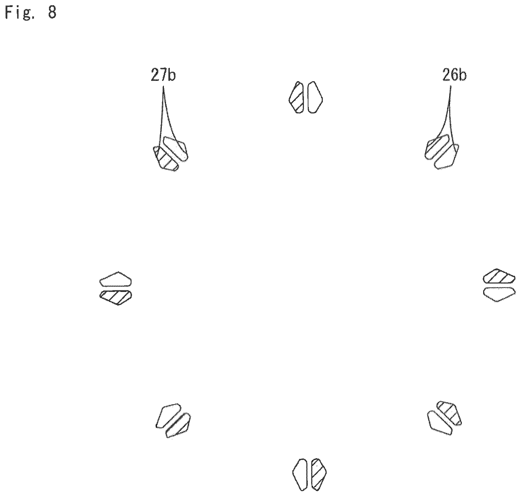

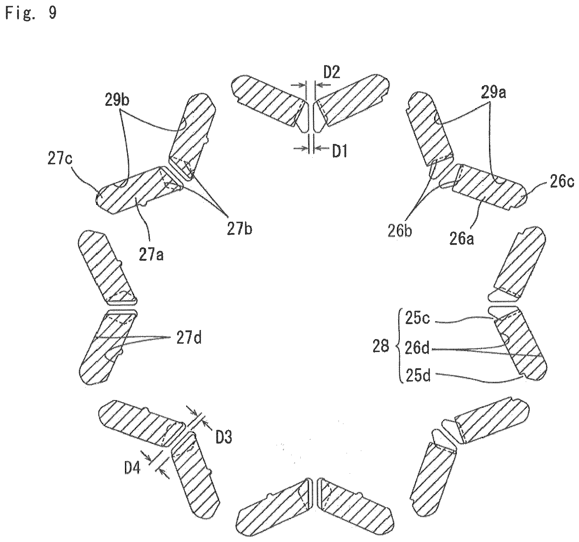

Fig. 7 is an enlarged view of the first space portions 26b and 27b formed in a first step of a first space portion punching step in Fig. 6. Fig. 8 is an enlarged view of the first space portions 26b and 27b formed in a second step of the first space portion punching step in Fig. 6. Fig. 9 is an enlarged view of the second punched holes 29a and 29b formed in a through hole punching step.

Note that in Figs. 6 to 10, the shaded portions in each figure are portions punched out in each pressing step.

First, the first space portions 26b and 27b are punched in the electromagnetic steel sheet 100 which is a magnetic material. That is, a plurality of triangular holes are punched in the electromagnetic steel sheet 100. This step is the first space portion punching step shown in Fig. 5, and corresponds to steps S1 and S2.

Specifically, one first space portion 26b of the pair of first space portions 26b constituting the set of positioning through holes 26 arranged side by side in a V shape and one first space portion 27b of the pair of first space portions 27b constituting the set of rotor magnet through holes 27 arranged side by side in a V shape are simultaneously punched in the electromagnetic steel sheet 100. In the present embodiment, the one of the first space portions 26b and the one of the first space portions 27b are formed in the electromagnetic steel sheet 100 at equal intervals in the circumferential direction. This state is shown on the far left in Fig. 6 and in Fig. 7.

The above-mentioned punching step corresponds to the first step of the first space portion punching step in Fig. 5.

Next, the other first space portion 26b of the pair of first space portions 26b constituting the set of positioning through holes 26 arranged side by side in a V shape and the other first space portion 27b of the pair of first space portions 27b constituting the set of rotor magnet through holes 27 arranged side by side in a V shape are simultaneously punched in the electromagnetic steel sheet 100. In the present embodiment, the other one of the first space portions 26b and the other one of the first space portions 27b are formed side by side with the one of the first space portions 26b and the one of the first space portions 27b. The other one of the first space portions 26b and the other one of the first space portions 27b are formed at equal intervals in the circumferential direction. This state is shown in the second from the left in Fig. 6 and in Fig. 8.

The above-mentioned punching step corresponds to the second step of the first space portion punching step in Fig. 5.

As described above, by punching the first space portions 26b and 27b of the positioning through hole 26 and the rotor magnet through hole 27 in the electromagnetic steel sheet 100, common areas in the positioning through hole 26 and the rotor magnet through hole 27 can be easily formed.

Moreover, the first space portions 26b and 27b are relatively small areas in the positioning through hole 26 and the rotor magnet through, hole 27, respectively. Therefore, the electromagnetic steel sheet 100 after the first space portions 26b and 27b are punched is less likely to be distorted.

Further, as described above, when punching the first space portions 26b and 27b in the electromagnetic steel sheet 100, by dividing the step into two steps, namely the first step and the second step, distortion is less likely to be caused in the electromagnetic steel sheet 100 as compared with the case of punching all of the first space portions 26b and 27b simultaneously.

Further, by forming a plurality of first space portions 26b and 27b in the electromagnetic steel sheet 100 at equal intervals in the circumferential direction, it is possible to suppress the occurrence of bending of the electromagnetic steel sheet 100 during transfer due to the imbalance of the punched shape of the electromagnetic steel sheet 100.

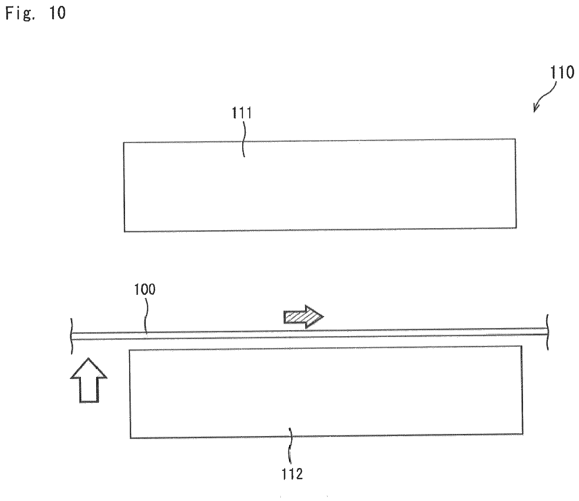

By forming the first space portions 26b and 27b in the electromagnetic steel sheet 100 as described above, when the electromagnetic steel sheet 100 is transferred to the die 110 as shown in Fig. 10, it is possible to position the electromagnetic steel sheet 100 with respect to the die 110 with high accuracy. Therefore, the rotor core member 25 can be accurately formed from the electromagnetic steel sheet 100. In Fig. 10, a reference numeral 111 denotes a movable type, and a reference numeral 112 denotes a fixed type. Further, in Fig. 10, the white arrow indicates the direction in which the electromagnetic steel sheet 100 is lifted with respect to the fixed type 112, and the shaded arrow indicates the direction in which the electromagnetic steel sheet 100 is transferred to the die 110.

The first space portions 26b and 27b are part of the common portion in the positioning through hole 26 and the rotor magnet through hole 27 and have the same shape, and correspond to the first punched holes that are not related to the positioning of the rotor magnet 22. Further, the first space portion punching steps S1 and S2 correspond to the first punching step of the present invention.

Next, the remaining portions of the positioning through hole 26 and the rotor magnet through hole 27 are punched in the electromagnetic steel sheet 100 after the first space portions 26b and 27b are punched. Specifically, the positioning housing portion 26a and the second space portion 26c of the positioning through hole 26, and the rotor magnet housing portion 27a and the second space portion 27c of the rotor magnet through hole 27 are punched at the same time. This step is the through hole punching step shown in Fig. 5, and corresponds to step S3. This state is shown in Fig. 6 at the third position from the left and in Fig. 9.

Specifically, in the portion where the positioning through hole 26 is formed in the electromagnetic steel sheet 100, the positioning housing portion 26a and the second space portion 26c are simultaneously formed along with the first space portion 26b. In the portion where the rotor magnet through hole 27 is formed in the electromagnetic steel sheet 100, the rotor magnet housing portion 27a is formed so as to overlap the first space portion 26b, and the second space portion 27c is also formed. The rotor magnet housing portion 27a and the second space portion 27c are formed at the same time.

As a result, the positioning through hole 26 and the rotor magnet through hole 27 as shown on the far right of Fig. 6 and Fig. 9 are formed in the electromagnetic steel sheet 100.

In the present embodiment, as shown in Fig. 6, four positioning through holes 26 are formed side by side in the circumferential direction, and four rotor magnet through holes 27 are also formed side by side in the circumferential direction. The positioning through holes 26 and the rotor magnet through holes 27 are formed in the electromagnetic steel sheet 100 at equal intervals in the circumferential direction.

With the above configuration, the positioning through holes 26 and the rotor magnet through holes 27 can be formed in the electromagnetic steel sheet 100 with a small number of steps.

Here, the positioning housing portion 26a and the second space portion 26c of the positioning through hole 26 constitute a second punched hole 29a which is at least a portion of the remaining part of the positioning through hole 26 other than the first space portion 26b. The rotor magnet housing portion 27a and the second space portion 27c of the rotor magnet through hole 27 constitute a second punched hole 29b which is at least a portion of the remaining part of the rotor magnet through hole 27 other than the first space portion 27b. Further, the through hole punching step S3 corresponds to the second punching step of punching the second punched holes 29a and 29b in the electromagnetic steel sheet 100 after the first space portion punching step.

As shown in Figs. 6 and 9, the second punched holes 29a and 29b have a larger area than the first space portions 26b and 27b. Further, the pair of second punched holes 29a constituting a set of positioning through holes 26 adjacent to each other in the circumferential direction have a shortest distance D1 that is greater than a shortest distance D2 of the pair of first space portions 26b. The pair of second punched holes 29b constituting a set of rotor magnet through holes 27 adjacent to each other in the circumferential direction has a shortest distance D3 that is greater than a shortest distance D4 of the pair of first space portions 27b.

Here, the shortest distance means the shortest distance between the portions where the peripheral edge of the hole and the peripheral edge of the hole are closest to each other.

After that, although not particularly shown, as step S4 shown in Fig. 5, the central through hole 25a is punched in the electromagnetic steel sheet 100, and then, as step S5 shown in Fig. 5, the outer shape of the rotor core member 25 is punched. Then, as step S6 shown in Fig. 5, a plurality of rotor core members 25 are stacked in the thickness direction to form the rotor core 21. At this time, the rotor core members 25 adjacent to each other in the thickness direction are stacked in a state of being rotated by a predetermined angle in the circumferential direction.

The positioning through holes 26 and the rotor magnet through holes 27 of the plurality of rotor core members 25 are located at positions overlapping each other when viewed in the axial direction of the central axis P in a state where the plurality of rotor core members 25 are stacked. As a result, the first magnet insertion hole 23 of the rotor core 21 is formed by the positioning through hole 26 and the rotor magnet through hole 27. Similarly, the positioning through hole 26 and the rotor magnet through hole 27 constitute the second magnet insertion hole 24 of the rotor core 21.

In this way, by stacking the rotor core members 25 by rotating them at a predetermined angle in the circumferential direction when stacking the rotor core members 25 in the thickness direction, it is possible to reduce the frictional resistance when the rotor magnets 22 are inserted into the first magnet insertion holes 23 and the second magnet insertion holes 24 respectively, as compared with the case where the first magnet insertion hole and the second magnet insertion hole are formed only by the positioning through holes 26. Therefore, the productivity of the rotor core 21 can be improved.

In the present embodiment, the motor 1 includes the rotor core 21 in a columnar shape, the rotor core being configured of the plurality of disk-shaped rotor core members 25 stacked in the thickness direction and having the plurality of magnet insertion holes 21c penetrating in the axial direction and arranged side by side in the circumferential direction, and the rotor magnets 22 inserted in the magnet insertion holes 21c. The positioning through holes 26 and the rotor magnet through holes 27 constituting the plurality of magnet insertion holes 21c in the rotor core member 25 include through holes having different shapes.

The manufacturing method of the motor 1 includes first space portion punching steps S1 and S2, and a through hole punching step S3. The first space portion punching steps S1 and S2 include punching a plurality of first space portions 26b and 27b in a band-shaped electromagnetic steel sheet 100. The first space portions 26b and 27b are part of a common portion in the positioning through hole 26 and the rotor magnet through hole 27 and have a same shape and do not affect positioning of the rotor magnet 22. The through hole punching step S3 includes punching at least a portion of the remaining parts of the positioning through hole 26 and the rotor magnet through hole 27 other than the first space portions 26b and 27b, in the electromagnetic steel sheet 100 after the first space portion punching step.

By punching the plurality of first space portions 26b and 27b that are part of a common portion in the positioning through hole 26 and the rotor magnet through hole 27 of the rotor core member 25 and have a same shape and do not affect the positioning of the rotor magnet 22, in the band-shaped electromagnetic steel sheet 100, it is possible to prevent bending of the electromagnetic steel sheet 100 that may be caused by the imbalance of the punched shape when transferring the electromagnetic steel sheet 100 to the die after punching the first space portions 26b and 27b. As a result, when the electromagnetic steel sheet 100 is transferred to the die, the electromagnetic steel sheet 100 can be accurately positioned with respect to the die. Therefore, the machining accuracy of the rotor core member 25 can be improved.

In the through hole punching step S3, the positioning housing portion 26a in which the rotor magnet 22 is to be positioned, of the positioning through hole 26 and the rotor magnet through hole 27, is punched. As a result, in the rotor core member 25, the positioning housing portion 26a in which the rotor magnet 22 is to be positioned can be formed with high accuracy.

The rotor core member 25 forms a part of the inner edge of at least one through hole of the positioning through hole 26 and the rotor magnet through hole 27, and has a positioning portion 28 for positioning the rotor magnet 22 in the magnet insertion hole 21c. In the first space portion punching steps S1 and S2, a portion of the positioning portion 28 not facing the rotor magnet 22 is punched, and in the through hole punching step S3, a portion of the positioning portion 28 facing the rotor magnet 22 is punched.

Generally, in a plurality of punching steps, the dimensional accuracy of the portion formed in the subsequent punching step is high. Therefore, as described above, by forming the portion of the positioning portion 28 facing the rotor magnet 22 in the subsequent punching step, the dimensional accuracy of the facing portion can be improved.

Therefore, when the rotor core member 25 has the positioning portion 28 at a portion of the inner edge of the positioning through hole 26, the portion of the positioning portion 28 used for positioning the rotor magnet 22 can be accurately formed in the magnet insertion hole 21c.

In the first space portion punching steps S1 and S2, the pair of first space portions 26b and 27b are punched to be arranged side by side in the circumferential direction in the electromagnetic steel sheet 100, and in the through hole punching step S3, as at least a portion of the remaining part, the pair of second punched holes 29a and 29b having an area greater than the first space portions 26b and 27b are punched. The pair of second punched holes 29a and 29b are configured of the positioning housing portion 26a and the second space portion 26c of the positioning through hole 26, and the rotor magnet housing portion 27a and the second space portion 27c of the rotor magnet through hole 27.

As a result, in the first space portion punching steps S1 and S2 performed on the electromagnetic steel sheet 100 first, the area of the holes punched in the electromagnetic steel sheet 100 is smaller than that in the through hole punching step S3. Therefore, deformation that may be caused in the electromagnetic steel sheet 100 in the first space portion punching steps S1 and S2 can be suppressed. Therefore, the distortion caused in the electromagnetic steel sheet 100 by punching can be reduced.

The shortest distances D1 and D3 of the pair of second punched holes 29a and 29b are greater than the shortest distances D2 and D4 of the pair of first space portions 26b and 27b. As a result, deformation that may be caused in the electromagnetic steel sheet 100 in the first space portion punching steps S1 and S2 can be suppressed. Therefore, the distortion caused in the electromagnetic steel sheet 100 by punching can be reduced.

### (Other embodiments)

Although the embodiment of the present invention has been described above, the above-described embodiment is merely an example for carrying out the present invention. Therefore, the above-described embodiment can be appropriately modified and implemented without being limited by the above-described embodiment and within a range not deviating from the gist thereof.

In the above-described embodiment, the configuration shown in Fig. 1 has been described as the configuration of the motor 1. However, the configuration of the motor may be a configuration other than the configuration shown in Fig. 1. That is, the motor may be a motor having a configuration other than that shown in Fig. 1 as long as it is an IPM motor.

In the above embodiment, the first space portions 26b and 27b have a triangular shape. However, the first space portion may have another shape.

In the above embodiment, the rotor core member 25 has four positioning through holes 26 arranged side by side in the circumferential direction and four rotor magnet through holes 27 arranged side by side in the circumferential direction. However, the rotor core member may have only a plurality of positioning through hole, or may have only a plurality of rotor magnet through holes. Further, the rotor core member may have three or less or five or more positioning through holes. Further, the rotor core member may have three or less or five or more rotor magnet through holes.

In the above embodiment, the positioning through hole 26 includes the positioning housing portion 26a, the first space portion 26b, and the second space portion 26c. However, the positioning through hole may include only one of the first space portion and the second space portion or may not include both.

In the above embodiment, the rotor core member 25 has the first positioning protrusion 25c and the second positioning protrusion 25d at the peripheral edge of the positioning through hole 26. However, the rotor core member may have only one of the first positioning protrusion and the second positioning protrusion or may not have both. Further, the rotor core member may have at least one of the first positioning protrusion and the second positioning protrusion at the peripheral edge of the rotor magnet through hole.

In the above embodiment, the rotor magnet through hole 27 includes the rotor magnet housing portion 27a, the first space portion 27b, and the second space portion 27c. However, the rotor magnet through hole may include only one of the first space portion and the second space portion or may not include both.

### Industrial Applicability

The present invention is applicable to a method of manufacturing a rotor for an IPM motor, the rotor including a columnar rotor core formed by stacking a plurality of disk-shaped rotor core members in the thickness direction and having magnet insertion holes penetrating in the axial direction, and rotor magnets inserted in the magnet insertion holes.

### Reference Signs List

1 motor
2 rotor
3 stator
4 housing
20 shaft
21 rotor core
21a shaft through hole
21b radial connection portion
21c magnet insertion hole
22 rotor magnet
23 first magnet insertion hole
24 second magnet insertion hole
25 rotor core member
25a central through hole
25b connection portion
26 positioning through hole (through hole)
26a positioning housing portion (magnet housing portion)
26b first space portion (first punched hole)
26c second space portion
26d long side portion
27 rotor magnet through hole (through hole)
27a rotor magnet housing portion
27b first space portion (first punched hole)
27c second space portion
27d long side portion
28 positioning portion
29 second punched hole
31 stator core
32 stator coil
100 electromagnetic steel sheet (plate member)
P central axis

## Claims

1. A method of manufacturing a rotor (2) for an IPM motor, the rotor (2) including:
a rotor core (21) in a columnar shape having a plurality of magnet insertion holes (21c) penetrating in an axial direction and arranged side by side in a circumferential direction, the rotor core (21) being configured of a plurality of disk-shaped rotor core members (25) stacked in a thickness direction; and
a rotor magnet (22) inserted in each of the magnet insertion holes (21c),
a plurality of through holes constituting the plurality of magnet insertion holes (21c) in each of the rotor core members (25) including a through hole having a different shape,
the method **characterized by**
a first punching step of punching, in a plate member (100), a plurality of first punched holes (26b) that are part of a common portion of the plurality of through holes and have a same shape and that are not related to positioning of the rotor magnet (22); and
a second punching step of punching, in the plate member (100) after the first punching step, at least a portion of a remaining part of the plurality of through holes other than the first punched holes (26b) as a second punched hole (29) .

2. The method of manufacturing the rotor (2) for the IPM motor according to claim 1, **characterized in that** the second punching step includes punching a magnet housing portion in which the rotor magnet (22) is to be positioned, of the plurality of through holes.

3. The method of manufacturing the rotor (2) for the IPM motor according to claim 1 or 2, **characterized in that**
the rotor core member (25) includes a positioning portion (28) that constitutes a portion of an inner edge of at least one through hole among the plurality of through holes and positions the rotor magnet (22) in the magnet insertion hole (21c),
the first punching step includes punching a portion, not facing the rotor magnet (22), of the positioning portion (28), and
the second punching step includes punching a portion, facing the rotor magnet (22), of the positioning portion (28) .

4. The method of manufacturing the rotor (2) for the IPM motor according to claim 1, **characterized in that**
the first punching step includes punching, in the plate member (100), a pair of the first punched holes (26b) so as to be arranged side by side in the circumferential direction, and
the second punching step includes punching a pair of the second punched holes (29) having an area greater than an area of the first punched holes (26b), as at least a portion of the remaining part.

5. The method of manufacturing the rotor (2) for the IPM motor according to claim 4, **characterized in that** the pair of second punched holes (29) punched in the second punching step has a shortest distance that is greater than a shortest distance of the pair of first punched holes (26b).
